# EUROPÄISCHE PATENTANMELDUNG

(11) **EP 3 795 538 A1**
(43) Veröffentlichungstag der Anmeldung: **24.03.2021**
(21) Anmeldenummer: 19198958.1
(22) Anmeldetag: 23.09.2019
(51) Int. Cl.: C01B 7/01, B01J 19/24, C01B 11/02

(54) **VORRICHTUNG ZUR HERSTELLUNG VON CHLORDIOXID UND/ODER CHLOR**

(71) Anmelder: Schmid, Erich, 67435 Neustadt (DE)
(72) Erfinder: Schmid, Erich, 67435 Neustadt (DE)
(74) Vertreter: Zellentin & Partner mbB Patentanwälte

(57) **Zusammenfassung**

Vorrichtung zur Herstellung von reinem Chlordioxid und/oder Chlor umfassend
- einen Reaktionsbehälter (3) mit getrennten Leitungen (1a, 2a) für die Zufuhr von Perchlorat-, Chlorat-, Hypochlorit- und/oder Chloritlösung, die ein Carbonat und/oder Hydrogencarbonat in einer solchen Menge enthält, dass pro Mol Chlordioxid und Chlor mindestens 0,25 mol Kohlendioxid gebildet werden, und Säurelösung, der einen Gasauslass und einen Flüssigkeitsauslass aufweist
- einen ersten Waschbehälter (6), der mit dem Gasauslass des Reaktionsbehälters (3) verbunden ist, um gebildetes Chlordioxid und/oder Chlor von gebildetem Kohlendioxid zu trennen und in Wasser zu lösen um eine wässrige Lösung von Chlordioxid und/oder Chlor zu bilden,
- einen Vorratsbehälter (9) für die wässrige Lösung von Chlordioxid und/oder Chlor,
- einen Wellschlauch-Reaktor (11), der einen Gasauslass und einen Flüssigkeitseinlass an seinem ersten Ende und einen Flüssigkeitsauslass und Gaseinlass an seinem anderen Ende aufweist, wobei sein Flüssigkeitseinlass mit dem Flüssigkeitsauslass des Reaktionsbehälters (3) verbunden ist und sein Gaseinlass mit dem ersten Waschbehälter (6) verbunden ist, um das abgetrennte Kohlendioxid dem Wellschlauch-Reaktor (11) zuzuführen, wobei der Wellschlauch-Reaktor (11) so ausgebildet ist, dass die zugeführte Reaktionslösung eine flüssige Phase bildet, das Chlor und/oder Chlordioxid aus der flüssigen Phase ausgast und eine Gasphase bildet, die zusammen mit dem im ersten Waschbehälter abgetrennten Kohlendioxid im Gegenstrom zur Reaktionslösung geführt wird, und
- einen zweiten Waschbehälter (13) der mit dem Gasauslass des Wellschlauch-Reaktors (11) verbunden ist, um gebildetes Chlordioxid und/oder Chlor von gebildetem Kohlendioxid zu trennen und in Wasser zu lösen um weitere wässrige Lösung von Chlordioxid und/oder Chlor zu bilden.

## Beschreibung

Die vorliegende Erfindung betrifft eine Vorrichtung zur Herstellung von reinem, d.h. Edukt- und Nebenprodukt-freiem, Chlordioxid und/oder Chlor.

Chlordioxid ist eine chemische Verbindung von Chlor und Sauerstoff mit der Summenformel ClO₂. Bei Raumtemperatur ist Chlordioxid ein bernsteinfarbenes, explosives und giftiges Gas mit stechendem, chlorähnlichem Geruch.

Die Anwendungen von Chlordioxid beruhen auf seiner Wirkung als Oxidationsmittel. Es ist das wichtigste Bleichmittel der Elementar-Chlor-Freien Bleiche von Zellstoff, insbesondere bei Papier, in der es elementares Chlor fast vollständig ersetzt hat. Zunehmend wird Chlordioxid auch zur Desinfektion vor der Abfüllung von PET-Flaschen verwendet. Weiterhin wird es in der Trinkwasseraufbereitung zur Desinfektion an Stelle von Chlor eingesetzt. Es ist gegen Bakterien genauso oder besser wirksam als Chlor und im Gegensatz zu Chlor auch gegen Viren und viele Protozoen (Einzeller) wirksam.

Zur Chlordioxiderzeugung können viele Verfahren verwendet werden. Am häufigsten ist die Verwendung von Salzsäure und Natriumchlorit als Ausgangskomponenten, da die Herstellung von Chlordioxid aus diesen beiden Komponenten von der Trinkwasserverordnung zugelassen ist. Die Umsetzung erfolgt nach der Gleichung:

5NaClO₂ + 4HCl → 4ClO₂ + 5NaCl + 2H₂O

Es können aber auch andere Substanzen mit Natriumchlorit oder mit einem anderen Chlorit umgesetzt werden. Anstelle von Salzsäure eignen sich andere Säuren, wie Schwefelsäure bzw. Säurebildner wie Peroxodisulfate, z. B. Natrium-, Kalium- oder Ammoniumperoxodisulfat, hypochlorige Säure und andere. Statt Natriumchlorit können Chlorite mit anderen Kationen, z.B. Alkalichlorite und Erdalkalichlorite verwendet werden.

Chlordioxidgas kann auch aus Chloraten und Perchloraten hergestellt werden. Diese Umsetzung erfolgt z.B. bei Reaktion von Natriumperchlorat (erhältlich aus einer Elektrolyse von Natriumchlorid) mit Salzsäure nach der Gleichung:

2NaClO₃ + 4HCl → 2ClO₂ + Cl₂ + 2 NaCl + 2H₂O

Es gibt bereits viele Vorschläge für Vorrichtungen zur Herstellung von Chlordioxid. Die Schwierigkeiten liegen darin, eine möglichst vollständige Umsetzung in adäquater Zeit zu erhalten und dabei explosive Konzentrationen von Chlordioxidgas zu vermeiden. Im Stand der Technik können daher die Ausgangsmaterialien nur in solchen Konzentrationen verwendet werden, in denen das Chlordioxid in einer noch nicht explosionsgefährlichen Konzentration erzeugt wird. Das sind meist Gehalte bis maximal 20 000 ppm. Lösungen in Wasser sind nicht explosiv, sofern sie kein Chlordioxid-Luft-Gemisch mit mehr als 10 Vol.-% Chlordioxid erzeugen können. Auch Vorrichtungen und Verfahren, die zunächst mit konzentrierten Rohstoffen zu arbeiten scheinen, verdünnen vor oder bei der Reaktion die Rohstoffe mit Wasser auf ungefährliche Konzentrationen.

Zur Lösung dieser Probleme schlagen viele Dokumente ein Abführen des ausgegasten Chlordioxids durch im Gegenstrom geführtes Gas und/oder Vakuum vor. Eine vollständigere Umsetzung der Edukte gelingt durch Vorrichtungen mit mehreren getrennten Reaktionsräumen. Beispiele für solche Vorrichtungen finden sich in DE 967 375 A, DE 31 28 817 A1, DE 32 18 475 A1, DE 32 39 029 A1, WO 2009/084854 A2 und EP 2 662 328 A1. In der DE 10 2010 001 699 A1 und US 6,051,135 A wurde vorgeschlagen, die Umsetzung in einem Schlauchreaktor durchzuführen. Während gemäß der DE 10 2010 001 699 A1 der Schlauch gasdurchlässig sein soll, um gebildetes Chlordioxid aus dem Reaktionsraum abzuziehen, sieht die US 6,051,135 A eine Trennung in einer separaten Strippvorrichtung vor. Beiden Vorschlägen ist gemeinsam, dass die Umsetzung in einer homogenen Reaktionslösung erfolgen soll und die Vollständigkeit der Umsetzung durch die Verweilzeit bestimmt ist. Konzentrierte Edukte sind nur bedingt möglich und die Trennung des Chlordioxids von der Reaktionslösung ist aufwändig. Der zuvor genannte Stand der Technik hat soweit es sich um kontinuierliche Verfahren handelt ähnliche Probleme. Bei der Vorrichtung gemäß EP 2 662 328 A1 sind zwar eine weitgehend vollständige Umsetzung und saubere Abtrennung von Chlordioxid gewährleistet, sie arbeitet jedoch nicht kontinuierlich. Eine kontinuierlich betriebene Vorrichtung wird in der nicht vorveröffentlichten EP 18176762.5 vorgeschlagen, bei der der Reaktor von einem Wellschlauch oder einem anderen, getrennte Kompartimente bereitstellenden Schlauch gebildet wird. In diesem Reaktor strömen Hypochlorit-, Chlorat-, Perchlorat- bzw. Chloritlösung im Gegenstrom mit dem die Gasphase bildenden Chlor bzw. Chlordioxid durch den waagerecht oder unter einem Neigungswinkel angeordneten Schlauch. In den Kompartimenten sammelt sich flüssige Phase, in welcher die Umsetzung erfolgt. Die Gasphase, welche von ausgasendem Chlor bzw. Chlordioxid sowie ggfs. zugeführtem zusätzlichem Verdünnungsgas gebildet wird, strömt darüber hinweg. Die Abfuhr der Gasphase aus dem Reaktor kann durch eine Vakuumpumpe und/oder Zufuhr von zusätzlichem Verdünnungsgas mit Überdruck unterstützt werden. Durch die Abführung des Chlors und/oder Chlordioxids im Gegenstrom wird das Reaktionsgleichgewicht in Richtung der gewünschten Gase verschoben, so dass eine weitgehend vollständige Umsetzung gewährleistet ist und die Konzentration im sicheren Bereich bleibt.

Weitere Beispiele für bisherige Vorschläge finden sich u.a. in DE 967 375 A, DE 31 28 817 A1, DE 32 18 475 A1, DE 32 39 029 A1, WO 2009/084854 A2 und EP 2 662 328 A1, DE 10 2010 001 699 A1 und US 6,051,135 A.

Außerdem ist es bekannt, Chlordioxid aus festen, trockenen Zusammensetzungen zu erzeugen. Beispiele für geeignete feste Zusammensetzungen finden sich in WO 2012/019587 A1, EP 933 991 B1, US 4,547,381 A und US 2,482,891 A. Auch bei diesen Verfahren werden verdünnte Edukte eingesetzt, nämlich auf Träger aufgebrachte oder anderweitig feste Edukte, wobei teilweise ein Verdünnungsmittel enthalten sein soll.

Schließlich ist es bekannt, dass wässriges Chlordioxid in Lösung durch Puffer stabilisiert werden kann, siehe z.B. US 3,585,147. Auch wässrige Natriumchloritlösungen enthalten in der Regel herstellungsbedingt geringe Mengen Natriumcarbonat.

Die Zufuhr von Verdünnungsgas bei der Herstellung von Chlordioxid in wässriger Phase erfordert zusätzliche Vorrichtungen am Reaktor für die Umsetzung. Es ist in der Regel nicht möglich, das Verdünnungsgas gezielt an der Stelle zuzusetzen, an welcher am meisten Chlordioxid gebildet wird, da sich diese Stelle durch geringe Änderungen in den Bedingungen leicht innerhalb des Reaktor verschiebt. Daher wäre es wünschenswert, eine möglichst vollständige Umsetzung der Edukte in adäquater Zeit zu erreichen und gleichzeitig explosive Konzentrationen von Chlordioxidgas sicher zu vermeiden.

Ein weiteres sehr wichtiges Desinfektionsmittel ist Chlor, welches vor allem in Schwimmbädern zur Wasserdesinfektion eingesetzt wird. Auch in Trinkwasseranlagen ist Chlor üblich, besonders in offenen Anlagen, bei denen Chlordioxid zu stark ausgasen könnte. Chlor kann entweder in Gasflaschen in reiner Form angeliefert und aus diesen dosiert werden oder analog zu Chlordioxid vor Ort erzeugt werden. Die Gasflasche liefert zwar reines Chlor, birgt aber hohe Risiken, die Handhabung erfordert enorme Sicherheitsvorkehrungen. Eine Herstellung vor Ort erfolgt bisher entweder durch Chlor-Alkali-Elektrolyse oder durch Zugabe von Hypochlorit, meist als wässrige Lösung von Natriumhypochlorit oder als festes Calciumhypochlorit.

Bei der Chlor-Alkali-Elektrolyse reagiert Chlorid unter Stromzufuhr mit Wasser zu Chlor, Wasserstoff und Hydroxid. Die Umsetzung erfolgt nach der Gleichung:

2Cl⁻ + 2H₂O→ Cl₂ + 2OH⁻ + H₂

Als Nebenprodukte bilden sich abgesehen von Hydroxid und Wasserstoff z.B. Chlorite, Chlorate und Perchlorate, da die Elektrolyse nicht selektiv möglich ist. Die Elektrolyse erfolgt direkt im zu behandelnden Wasser, so wird im Ergebnis mit einer sehr "schmutzigen" Lösung desinfiziert, es gelangen viele Nebenprodukte ins Wasser. Die entstehende Lauge kann zur pH-Wert Justierung des Schwimmbadwassers verwendet werden oder muss stark verdünnt - z.B. mit enthärtetem Wasser - ins Abwasser entsorgt werden.

Die Erzeugung von Chlor aus Hypochlorit und Säure erfolgt gemäß den Gleichungen (am Beispiel von Natriumhypochlorit und Salzsäure):

NaOCl + 2HCl → HOCl + 2H₂O

HOCl + HCl → Cl₂ + HCl

Bei der Verwendung von Natriumhypochloritlösung oder Calciumhypochlorit sind bedingt durch deren Herstellung immer Chloride und Chlorate enthalten. Zudem disproportioniert Hypochlorit in wässriger Lösung zu Chlorid und Chlorat, siehe z.B. "Hygieneanforderungen an Bäder und deren Überwachung", Bundesgesundheitsblatt 2014, DOI 10.1007/s00103-013-1899-7. Deren Gehalt steigt somit immer weiter an. Da die Lösung direkt dem Wasser zugeführt wird, sind diese Nebenprodukte unerwünscht, Chlorid weil es Korrosion verursacht und Chlorat weil es gesundheitlich bedenklich ist. Außerdem erhöht der Zusatz von Natronbleichlauge bzw. Chlorkalk den pH Wert des Wassers. Dieser muss daher umständlich mittels Säure, z.B. Schwefelsäure oder saurem Bisulfat, wieder auf den niedrigen pH Wert eingestellt werden, den die Hypochlorige Säure für gute und effektive Wirkung (Freisetzung von Chlor) braucht. Daher wäre es wünschenswert, reines Chlor sicher und ohne die mit Gasflaschen verbundenen Risiken bereitstellen zu können.

In der nicht vorveröffentlichten EP 18176769.0 wird vorgeschlagen, bei einer Herstellung von Chlor und/oder Chlordioxid in wässriger Phase durch den Zusatz einer ausreichenden Menge von Carbonat und/oder Hydrogencarbonat zu der Hypochlorit-, Chlorat-, Perchlorat- bzw. Chloritlösung auf sehr einfache Weise Kohlendioxid als Verdünnungsgas direkt örtlich und mengenmäßig mit der Chlor bzw. Chlordioxiderzeugung korreliert bereitzustellen.

Trotz all dieser Vorschläge besteht weiter die Aufgabe verbesserte, kostengünstige, robuste Vorrichtungen zur Herstellung von Chlor oder Chlordioxid zu finden, bei denen sowohl die vollständige Umsetzung der Edukte in adäquater Zeit gewährleistet ist als auch explosive Konzentrationen von Chlordioxidgas sicher vermieden werden.

Überraschend wurde nun gefunden, dass bei Ausnutzung der integrierten Kohlendioxid-Schutzgaserzeugung und Kombination von zwei Reaktoren, von denen einer ein Wellschlauch-Reaktor ist, und die jeweils mit einer Gaswäsche verbunden sind, eine vollständige bzw. nahezu vollständige Abtrennung von Chlordioxid und/oder Chlor aus der Reaktionslösung erfolgt. Durch die zwei Gaswäschen wird zudem Kohlendioxid effizient von Chlordioxid bzw. Chlor abgetrennt. Das in der ersten Gaswäsche abgetrennte Kohlendioxid wird als zusätzliches Schutzgas in dem zweiten Reaktor genutzt. Dadurch wird eine kostensparende Herstellung von reinem Chlordioxid und/oder Chlor ohne zusätzliche Einsatzmaterialen und Apparaturteile ermöglicht.

Somit löst die die vorliegende Erfindung die obige Aufgabe durch eine Vorrichtung zur Herstellung von Chlordioxid und/oder Chlor umfassend:
- einen Reaktionsbehälter mit getrennten Leitungen für die Zufuhr von Perchlorat-, Chlorat-, Hypochlorit- und/oder Chloritlösung, welche Carbonat und/oder Hydrogencarbonat in einer solchen Menge enthält, dass pro Mol Chlor und Chlordioxid mindestens 0,25 mol Kohlendioxid als Verdünnungsgas gebildet werden, und Säurelösung, der einen Gasauslass und einen Flüssigkeitsauslass umfasst,
- einen ersten Waschbehälter, der mit dem Gasauslass des Reaktionsbehälters verbunden ist, um gebildetes Chlordioxid und/oder Chlor von Kohlendioxid zu trennen und in Wasser zu lösen um eine wässrige Lösung von Chlordioxid und/oder Chlor zu bilden,
- einen Vorratsbehälter für die wässrige Lösung von Chlordioxid und/oder Chlor,
- einen Wellschlauch-Reaktor, der einen Gasauslass und einen Flüssigkeitseinlass an seinem ersten Ende und einen Flüssigkeitsauslass und Gaseinlass an seinem anderen Ende aufweist, wobei sein Flüssigkeitseinlass mit dem Flüssigkeitsauslass des Reaktionsbehälters verbunden ist und sein Gaseinlass mit dem ersten Waschbehälter verbunden ist, um das abgetrennte Kohlendioxid dem Wellschlauch-Reaktor zuzuführen, und wobei der Wellschlauch-Reaktor so ausgebildet ist, dass die zugeführte Reaktionslösung eine flüssige Phase bildet, das Chlor und/oder Chlordioxid aus der flüssigen Phase ausgast und eine Gasphase bildet, die zusammen mit dem im ersten Waschbehälter abgetrennten Kohlendioxid im Gegenstrom zur Reaktionslösung geführt wird, und - einen zweiten Waschbehälter, der mit dem Gasauslass des Wellschlauch-Reaktors verbunden ist, um gebildetes Chlordioxid und/oder Chlor von Kohlendioxid zu trennen und in Wasser zu lösen um weitere wässrige Lösung von Chlordioxid und/oder Chlor zu bilden.

Erfindungsgemäß wird Chlordioxid bevorzugt aus Chlorit und Säure, gemeinsam als Edukte bezeichnet, hergestellt. Eine Umsetzung von Chlorat und Säure führt zu mit Chlor vermischtem Chlordioxidgas. Solches Chlordioxid kann vorteilhaft sein, z.B. wird es in einigen Fällen zur Trinkwasserdesinfektion benutzt.

Die Herstellung von Chlor erfolgt aus Hypochlorit und Säure, ebenfalls gemeinsam als Edukte bezeichnet. Für die gezielte Herstellung von Gemischen aus Chlor und Chlordioxid können neben Chlorat und/oder Perchlorat und Säure auch Gemische von Hypochlorit und Chlorit, einzeln oder im Gemisch, mit Säure umgesetzt werden. Hypochlorit, Chlorit und Säure werden ebenso wie Chlorit und Säure, Chlorat und Säure, Perchlorat und Säure und Hypochlorit und Säure gemeinsam als Edukte bezeichnet.

Als Säure wird Salzsäure bevorzugt, jedoch kann auch jede andere chlor- bzw. chlordioxidstabile Säure verwendet werden, beispielsweise organische Säuren wie Essigsäure und Zitronensäure, oder andere Mineralsäuren, wie beispielsweise Schwefelsäure und hypochlorige Säure. Auch Mischungen von Säuren sind geeignet. Weiterhin sind auch solche Substanzen als Säure geeignet, die die Säure erst in wässriger Lösung freisetzen, wie beispielsweise Peroxodisulfate, insbesondere Natrium- oder Kaliumperoxodisulfat. Unter dem Begriff Säure sind daher im Rahmen der vorliegenden Erfindung auch säurebildende Substanzen wie Peroxodisulfate zu verstehen. Bevorzugte Salzsäurelösungen enthalten von 5 bis 40 Gew.-%, insbesondere 15 bis 38 Gew.-%, HCl. Es hat sich als günstig erwiesen, das in beiden Reaktanden vorhandene Wasser vornehmlich über die Perchlorat-, Chlorat-, Hypochlorit- und/oder Chlorit-Komponente einzubringen, da damit gleichzeitig auch die Konzentration an Carbonat bzw. Hydrogencarbonat erhöht und mehr CO₂ erzeugt wird.

Als Chlorit werden Alkali- und Erdalkalichlorite bevorzugt, ganz besonders wird Natriumchlorit bevorzugt. Es sind jedoch alle Chlorite einsetzbar, beispielsweise Kaliumchlorit, Calciumchlorit usw., ebenso Gemische von Chloriten. Handelsübliche Lösungen enthalten z.B. 20 - 30 Gew.-% Natriumchlorit.

Sofern Chlorat als Edukt eingesetzt wird, werden ebenfalls Alkali- und Erdalkalichlorate bevorzugt, ganz besonders wird Natriumchlorat bevorzugt. Wie an sich bekannt, kann Natriumchlorat durch Elektrolyse von Natriumchlorid erzeugt werden, wobei sich die bei der Umsetzung von Chlorat und Säure bildende verbrauchte Reaktionslösung hierfür als Einsatzmaterial gut eignet.

Als Hypochlorit werden Natriumhypochlorit und Kaliumhypochlorit bevorzugt, wobei ebenfalls andere Hypochlorite und Gemische verwendet werden können. Auch als Perchlorat werden Natriumperchlorat und Kaliumperchlorat bevorzugt, wobei ebenfalls andere Perchlorate und Gemische verwendet werden können.

Schließlich können zur gezielten Herstellung von Gemischen aus Chlor und Chlordioxid Gemische von Natriumchlorit mit Natriumhypochlorit und/oder Kaliumhypochlorit oder nur Natriumhypochlorit oder Kaliumhypochlorit verwendet werden. Die Bezeichnung Hypochlorit, Chlorat, Perchlorat und/oder Chlorit bedeutet ebenso wie die Bezeichnung Hypochlorit, Chlorat, Perchlorat bzw. Chlorit, dass es sich um Hypochlorit oder um Chlorat oder um Perchlorat oder um Chlorit oder um ein Gemisch von Chlorit mit Hypochlorit handelt.

Erfindungsgemäß wird der Hypochlorit-, Chlorat, Perchlorat- bzw. Chloritlösung ein Carbonat und/oder Hydrogencarbonat zugefügt, aus dem parallel zur Erzeugung von Chlor bzw. Chlordioxid als Verdünnungsgas Kohlendioxid erzeugt wird. Zur Vereinfachung wird im folgenden von (Hydrogen)carbonat gesprochen, was sowohl Hydrogencarbonat als auch Carbonat als auch Mischungen davon bezeichnet. Handelsübliche Natriumchloritlösung enthält zwar üblicherweise bereits eine geringe Menge Natriumcarbonat, das daraus gebildete Kohlendioxidgas verursacht aber keine merklichen Effekte, da die Menge viel zu gering ist.

Erfindungsgemäß wird die Menge (Hydrogen)carbonat vorzugsweise so gewählt, dass von 0,25 bis 5 mol (H)CO₃-Anion pro mol Hypochlorit, Chlorat, Perchlorat bzw. Chlorit enthalten sind, insbesondere von 0,5 bis 3 mol. Die Angaben verstehen sich in Bezug auf Hypochlorit, Chlorat, Perchlorat bzw. Chlorit so, dass deren gesamte Menge gemeint ist. Werden beispielsweise Hypochlorit und Chlorit verwendet, so werden pro mol der Summe an Hypochlorit und Chlorit je 0,25 bis 5 mol (Hydrogen)carbonat verwendet. Wird nur eines von Hypochlorit, Chlorat, Perchlorat und Chlorit eingesetzt, bezieht sich die Molmengenangabe auf dieses allein. Durch den Zusatz an (Hydrogen)carbonat bildet sich eine entsprechende molare Menge Kohlendioxid pro mol Chlor bzw. Chlordioxid. Die Untergrenze richtet sich nach der jeweils benötigten Menge Verdünnungsgas, welche u.a. von der Konzentration der Edukte und der Bauweise des Reaktors abhängt. Bei gekühlten Reaktoren oder einer kontinuierlichen Abfuhr des Chlordioxids z.B. mittels Vakuum ist die benötigte Menge geringer als bei einer diskontinuierlichen Herstellung. Ebenso ist bei Chlor die benötigte Menge z.B. geringer, wenn dieses durch Vakuum und/oder einen Inertgasstrom aus der Lösung ausgetrieben wird. Die Obergrenze resultiert daraus, dass einerseits mehr (Hydrogen)Carbonat mehr Säure verbraucht, die folglich nicht für die Umsetzung von Hypochlorit, Chlorat, Perchlorat bzw. Chlorit verfügbar ist, und andererseits zusätzliches Einsatzmaterial Kosten verursacht und unnötig Abfall produziert.

Als (Hydrogen)Carbonat sind prinzipiell alle CO₃²⁻-enthaltenden Verbindungen brauchbar, welche durch Reaktion mit Säure Kohlendioxid freisetzen. In einer Ausführungsform wird Kaliumhydrogencarbonat als (Hydrogen)Carbonat verwendet, da es gut löslich ist. In einer weiteren Ausführungsform wird Kaliumcarbonat verwendet, da eine erhöhte Salzkonzentration das Ausgasen von Chlordioxid aus der flüssigen Phase fördert. Natriumhydrogencarbonat sowie Natrium- und Kaliumcarbonat oder Gemische der genannten (Hydrogen)carbonate sind ebenfalls brauchbar. Außerdem sollte sich Ammonium(hydrogen)carbonat eignen. Die Verwendung anderer (Hydrogen)carbonate ist wegen der geringen Löslichkeit und/oder eines höheren Preises dieser Substanzen nicht wirtschaftlich.

Der große Vorteil des Einsatzes von (Hydrogen)carbonat in der Hypochlorit-, Chlorat-, Perchlorat- bzw. Chloritlösung besteht darin, dass das Verdünnungsgas Kohlendioxid zusammen mit dem Chlor bzw. Chlordioxid gebildet wird, d.h. genau an der Stelle, wo es gebraucht wird. Somit steht an Orten hoher Chlor bzw. Chlordioxidkonzentration auch eine große Menge Verdünnungsgas zur Verfügung.

Weitere Vorteile des Zusatzes von (Hydrogen)carbonat sind eine geringere Löslichkeit des Chlors und/oder Chlordioxids in der wässrigen Phase, da diese mehr Salz enthält, sowie eine Verbesserung der Ausgasung, da die gebildeten Kohlendioxidbläschen Chlor bzw. Chlordioxid mitreißen.

Die Mischung von Hypochlorit, Chlorat, Perchlorat bzw. Chlorit und (Hydrogen)carbonat sowie die Säure werden in der Regel aus Vorratsbehältern dosiert. Dazu kann jede an sich bekannte Dosiervorrichtung eingesetzt werden, beispielsweise eine Proportionalpumpe oder Ventile kombiniert mit der Schwerkraft. Säure und Hypochlorit, Chlorat, Perchlorat bzw. Chlorit werden dem ersten Reaktionsbehälter mit Hilfe getrennter Leitungen zugeführt. Sowohl Hypochlorit, Chlorat, Perchlorat bzw. Chlorit als auch Säure werden als wässrige Lösung eingesetzt.

Erfindungsgemäß enthält vorzugsweise die Hypochlorit-, Chlorat-, Perchlorat- bzw. Chloritlösung das (Hydrogen)Carbonat. Es ist auch möglich, aber nicht bevorzugt, das (Hydrogen)Carbonat aus einem separaten Vorratsbehälter in die Zufuhrleitung des Hypochlorits, Chlorats, Perchlorats bzw. Chlorits oder noch weniger bevorzugt in den Reaktionsbehälter einzuspeisen.

Bei der erfindungsgemäßen Vorrichtung werden zwei verschiedene Reaktoren verwendet. Der erste Reaktor ist ein Reaktionsbehälter, in den die Edukte zugeführt werden so dass sich eine Reaktionslösung bildet. Dieser erste Reaktionsbehälter hat nur einen Reaktionsraum und wird in der Regel von einem zylindrischen Behälter gebildet. Vorzugsweise ist ein Überlauf als Flüssigkeitsauslass vorgesehen. Der zweite Reaktor wird von einem Wellschlauch oder einem anderen, getrennte Kompartimente und damit Reaktionsräume bereitstellenden Schlauch gebildet. In diesem Reaktor strömen Hypochlorit-, Chlorat-, Perchlorat- bzw. Chloritlösung und (Hydrogen)Carbonat als Reaktionslösung im Gegenstrom mit dem die Gasphase bildenden Chlor bzw. Chlordioxid und Kohlendioxid durch den waagerecht oder unter einem Neigungswinkel angeordneten Schlauch. In den Kompartimenten sammelt sich flüssige Phase in welcher die Umsetzung erfolgt. Die Gasphase, welche von ausgasendem Chlor bzw. Chlordioxid und Kohlendioxid sowie ggfs. zugeführtem zusätzlichem Verdünnungsgas gebildet wird, strömt darüber hinweg.

Der Wellschlauch-Reaktor weist eine im Vergleich zum Durchmesser große Länge auf, die sowohl eine vollständige Umsetzung als auch eine vollständige Ausgasung von Chlor bzw. Chlordioxid im Gegenstromverfahren sichert. Bevorzugt beträgt das Verhältnis von Durchmesser zu Länge mindestens 1:30, bevorzugt mindestens 1:1000, besonders bevorzugt mindestens 1:20000. Der Durchmesser des Reaktors wird vorteilhaft so gewählt, dass bei der Umsetzung ein rascher Gastransport von Chlor und/oder Chlordioxid in Richtung des Gasauslasses erfolgt ohne dass die flüssige Phase in Richtung des Gasauslasses gedrückt wird. Der Vorteil des raschen Gastransports ist die niedrige Konzentration an Chlordioxid, das bei höheren Konzentrationen in der Gasphase zur Zersetzung/Explosion neigt bzw. an Chlor, das sonst nicht ausreichend ausgasen würde. Die Länge des Reaktors wird bevorzugt so gewählt, dass bei der Umsetzung eine vollständige Ausgasung von Chlor bzw. Chlordioxidgas aus der flüssigen Phase stattfindet.

Die absoluten Größen der Reaktordimensionen richten sich nach der gewünschten Menge Chlor bzw. Chlordioxid. Reaktionsbehälter und Wellschlauch-Reaktoren mit größeren Durchmessern und/oder größerer Höhe bzw. Länge erlauben die Herstellung einer höheren Menge Chlor bzw. Chlordioxid pro Zeiteinheit. Typische Volumen für den Reaktionsbehälter betragen von 0,05 bis 100 Liter, vorzugsweise von 0,5 bis 5 Liter. Typische Durchmesser für den Wellschlauch-Reaktor liegen im Bereich von 1 bis 10 cm, insbesondere von 1,5 bis 5 cm. Diese Angabe bezieht sich auf den lichten Innendurchmesser, der Außendurchmesser ist bedingt durch die wellenförmige Wandung sowohl innen als auch außen größer. Eine Wellung mit einer Tiefe von 5 bis 30 %, bevorzugt 15 bis 25 % des Innendurchmessers hat sich als geeignet erwiesen. Der Abstand der Wellen beträgt in der Regel von 50 bis 300 % der Tiefe, bevorzugt 150 bis 200 % der Tiefe. Die Länge des Reaktors beträgt üblicherweise 0,3 bis 50 m, insbesondere 1 bis 20 m.

Der Wellschlauch-Reaktor kann horizontal oder mit einem Gefälle, jedoch nicht vertikal, in der Vorrichtung angeordnet sein. Bei Anordnung mit Gefälle kann der Durchmesser des Reaktors im Vergleich zu horizontal angeordneten Reaktoren enger gewählt werden, da die Schwerkraft die flüssige Phase trotz des gegenläufigen Stroms der Gasphase zum Auslass des Reaktors befördern hilft. Vorteilhaft kann auch der Raum für die Gasphase kleiner sein, wodurch die Gasphase schneller strömt und die Konzentration des Chlors bzw. Chlordioxids und damit die Explosionsgefahr sinkt bzw. die Ausgasung gefördert wird. Das Gefälle kann in weiten Grenzen variieren, von horizontal bis hin zu 70°. Größere Gefälle wären möglich, erscheinen aber nicht sinnvoll, da die Strömungsgeschwindigkeit der flüssigen Phase sehr hoch würde und damit sehr lange Reaktoren benötigt würden, um die gewünschte weitgehende bis vollständige Umsetzung von Perchlorat, Chlorat, Hypochlorit bzw. Chlorit mit Säure und Ausgasung des Chlors und/oder Chlordioxids zu erreichen. Bei exakt horizontaler Verlegung des Reaktors können bei geeignet größerem Durchmesser auch größere Mengen flüssige Phase im Reaktor enthalten sein. In jedem Fall muss die Gasphase ausreichend Raum haben, um ein Herausdrücken der flüssigen Phase durch den Gasauslass zu verhindern.

Zweckmäßig wird der Reaktor in der Vorrichtung aufgewickelt. Horizontale Reaktoren können z.B. um einen Kern gewickelt werden, Reaktoren mit Gefälle beispielsweise um ein Rohr oder eine Stange gewickelt werden. Kleine Reaktoren sind in der Regel flexibel und biegsam und werden daher erst beim Einbau in der erfindungsgemäßen Vorrichtung in der gewünschten Anordnung fixiert. Bei wachsenden Durchmessern kommen eher zunehmend starre Reaktoren zum Einsatz, die meist bereits bei der Herstellung in die gewünschte Anordnung gebracht werden (müssen).

In einer Ausführungsform wird dem Reaktionsbehälter zusätzlich zu der Perchlorat-, Chlorat-, Hypochlorit- bzw. Chloritlösung und der Säurelösung Wasser zugeführt. Dazu kann auch ein Teil der am Flüssigkeitsauslass des Wellschlauch-Reaktors anfallenden flüssigen Phase verwendet werden. Das zusätzlich zugeführte Wasser verdünnt die aus Perchlorat-, Chlorat-, Hypochlorit- und/oder Chloritlösung und Säurelösung gebildete flüssige Phase. Die Wasserzufuhr erlaubt die Verwendung konzentrierter Lösungen von Perchlorat, Chlorat, Hypochlorit bzw. Chlorit und Säure ohne Explosionsgefahr.

In einer weiteren Ausführungsform kann der Reaktionsbehälter und/oder der Wellschlauch-Reaktor eine externe und/oder interne Kühlung aufweisen. Die Kühlung kann für den gesamten Reaktor oder nur für einen Abschnitt erfolgen. Geeignet ist z.B. die Anordnung des Reaktors in einem Temperierbad, eine doppelwandige Ausführung des Reaktors mit einem Temperiermedium im Außenmantel oder die Anordnung eines dünnen Temperiermittelschlauches im Inneren des Reaktors. Ein Temperiermittel kann im Gleich- oder Gegenstrom mit der flüssigen Phase geführt werden. Es ist weiter denkbar, den Reaktor mit Temperiermittel zu besprühen oder zu überströmen.

Erfindungsgemäß wird die entstehende Gasmischung aus Chlordioxid und/oder Chlor und Kohlendioxid aus dem Reaktionsbehälter und aus dem Wellschlauch-Reaktor jeweils einem Waschvorgang unterzogen, der in einem Waschbehälter stattfindet. Über eine Leitung wird dem Waschbehälter Wasser, z.B. entsalztes oder frisches Wasser, zugeführt und vorzugsweise als feiner Nebel versprüht. Mit frischem Wasser ist hier Wasser gemeint, dass nicht Edukte oder Nebenprodukte der Herstellung von Chlor bzw. Chlordioxid enthält. Dabei löst sich Chlordioxid bzw. Chlor weitestgehend in dem Wasser. Dagegen löst sich Kohlendioxid nur in geringem Maße, so dass von dem Chlor bzw. Chlordioxid abgetrennt wird. Kohlendioxid aus dem ersten Waschbehälter wird im Gegenstrom zur Reaktionslösung durch den Wellschlauchreaktor geführt. Kohlendioxid aus dem zweiten Waschbehälter enthält nahezu kein Chlordioxid bzw. Chlor mehr und kann daher entsorgt werden.

In einer Ausführungsform wird das im zweiten Waschbehälter abgetrennte Kohlendioxid mit der aus dem Wellschlauch-Reaktor austretenden, im wesentlichen vollständig umgesetzten Reaktionslösung vereinigt und in den Abwasserkanal entsorgt. Hierbei kann zur Entfernung etwaiger Reste an Chlordioxid bzw. Chlor in der Reaktionslösung eine Zersetzungseinheit vorgesehen sein. Die Zersetzung kann z.B. durch eine Bestrahlung mit Licht geeigneter Wellenlänge erfolgen und/oder restliche Chlor/Chlordioxidbestandteile können durch eine Heizung zerstört werden. Die geeignete Wellenlänge beträgt dabei bevorzugt ca. 350 nm. Die Zerstörung erfolgt bevorzugt in einem Temperaturbereich von 40 bis 90°C. Auch die Zerstörung durch eine Verbrauchselektrode aus Eisen, Aluminium oder anderes oxidierbares Material ist möglich. Alternativ kann die umgesetzte Reaktionslösung getrennt von dem Kohlendioxid entsorgt werden, insbesondere wenn eine Nutzungsmöglichkeit für das Kohlendioxid besteht. Auch eine Kombination der verschiedenen Zersetzungsmethoden kann eingesetzt werden.

Die in den Waschbehältern gebildete wässrige Lösung von Chlordioxid und/oder Chlor wird in einem Vorratsbehälter gesammelt. Aus diesem kann sie direkt zur Anwendung kommen. Es ist auch möglich, getrennte Vorratsbehälter für die Lösung aus dem ersten und aus dem zweiten Waschbehälter vorzusehen, wenn z.B. Lösungen von Chlordioxid bzw. Chlor mit verschiedenen Konzentrationen erzeugt werden sollen.

Bei der erfindungsgemäßen Vorrichtung beginnt die Erzeugung von Chlordioxid bzw. Chlor mit der Zufuhr der Edukte, ggfs. mit zusätzlichem Wasser, in den Reaktionsbehälter. Die Dosierung erfolgt dabei wie oben beschrieben in an sich bekannter Weise, z.B. über Dosierventile oder Kapillaren mit Absperrung. Im Reaktionsbehälter vermischen sich die Edukte zur Reaktionslösung und die Umsetzung beginnt. Eine Rührvorrichtung ist in der Regel nicht notwendig, kann aber bei Bedarf insbesondere bei großen Reaktionsbehältern vorgesehen werden. Das durch die Umsetzung der Edukte gebildete Chlordioxid bzw. Chlor nebst Kohlendioxid gast aus der Reaktionslösung aus und bildet eine Gasphase. Diese wird über den Gasauslass abgeführt. Zusätzlich kann eine Pumpe, z.B. eine Wasserstrahlpumpe, vorgesehen werden, die das Gas aus dem Reaktor abzieht. Die Reaktionslösung wird kontinuierlich über den Flüssigkeitsauslass und eine daran angeschlossene Leitung in den Wellschlauch-Reaktor geleitet oder der Wellschlauch-Reaktor ist direkt an den Flüssigkeitsauslass des Reaktionsbehälters angeschossen. Als Flüssigkeitsauslass ist ein Überlauf besonders zweckmäßig, weil diese Gestaltung robust und einfach ist. Die Reaktionslösung kann aber auch mittels Pumpe oder Ventil aus dem Reaktionsbehälter zum Wellschlauch-Reaktor gefördert werden. Ebenso kann eine Kapillare bzw. eine Leitung mit engem Querschnitt zur kontinuierlichen Überleitung der Reaktionslösung in den Wellschlauch-Reaktor dienen.

Die Gasphase aus dem Reaktionsbehälter wird dem ersten Waschbehälter zugeführt und durch innigen Kontakt mit Wasser, z.B. Bildung einer großen Oberfläche des Wassers durch Versprühen, in eine wässrige Lösung von Chlordioxid bzw. Chlor einerseits und gasförmiges Kohlendioxid andererseits überführt. Als Wasser wird in der Regel frisches Wasser verwendet. Es kann sich dabei auch um aufbereitetes Wasser z.B. entsalztes Wasser handeln, je nach Anwendung des Chlordioxids bzw. Chlors.

In einer Ausführungsform handelt es sich bei dem Waschbehälter um einen teilweise mit Wasser, d.h. der wässrigen Lösung von Chlordioxid bzw. Chlor gefüllten, Behälter, in den die Gasphase unten eingeleitet wird. Die Gasphase kann mittels einer großen Oberfläche von Wasser absorbiert werden. Die wässrigen Lösung von Chlordioxid bzw. Chlor wird unten abgeleitet.

In einer weiteren Ausführungsform wird die Gasphase, die aus Chlordioxid bzw. Chlor und Kohlendioxid gebildet wird, oberhalb des Wasserspiegels in den Waschbehälter eingeleitet und mit einem fein verteilten Wassernebel niedergeschlagen. Auch hierbei kann der Waschbehälter ein zylindrischer Behälter sein, aus dem die gebildete wässrige Lösung unten abgeführt wird. Dabei kann im unteren Bereich des Behälters wässrige Lösung enthalten sein.

Die wässrige Lösung von Chlordioxid bzw. Chlor, welche sich in dem ersten Waschbehälter bildet, wird in einen Vorratsbehälter abgeführt. Die Ableitung der wässrigen Lösung von Chlordioxid bzw. Chlor aus dem Waschbehälter kann analog zu der Überleitung der Reaktionslösung vom Reaktionsbehälter in den Wellschlauch-Reaktor erfolgen. Bevorzugt sind ein Überlauf oder eine Kapillare/Leitung mit engem Querschnitt, besonders bevorzugt ein Überlauf.

Da die Löslichkeit von Chlordioxid und Chlor in Wasser sehr hoch und wesentlich höher als die von Kohlendioxid ist, erfolgt eine Abtrennung des Kohlendioxids von Chlordioxid bzw. Chlor. Dadurch kann das Kohlendioxid aus dem ersten Waschbehälter in der erfindungsgemäßen Vorrichtung als Inertgas im Wellschlauch-Reaktor genutzt werden. In der Regel wird das (Hydrogen)Carbonat bereits im Reaktionsbehälter (nahezu) vollständig zu Kohlendioxid umgesetzt. Es schadet aber auch nicht, wenn die Verweilzeit der Reaktionslösung im Reaktionsbehälter für diese Umsetzung nicht ausreicht und ein Teil des (Hydrogen)Carbonat erst im Wellschlauch zu Kohlendioxid umgesetzt wird. Eine zusätzliche Inertgaszufuhr in den Wellschlauchreaktor ist zwar denkbar, würde aber die Vorrichtung unnötig komplizieren und ist daher üblicherweise nicht vorgesehen.

Im Wellschlauch-Reaktor bildet sich bei der weiteren Umsetzung von Perchlorat, Chlorat, Hypochlorit bzw. Chlorit und (Hydrogen)Carbonat mit Säure in der Reaktionslösung weiteres Chlordioxid bzw. Chlor und Kohlendioxid. Chlordioxid bzw. Chlor und Kohlendioxid gasen aus der flüssigen Phase aus, und bilden eine Gasphase. Diese wird, unterstützt von dem im Gegenstrom geführten Kohlendioxid aus dem ersten Waschbehälter, über den Gasauslass des Wellschlauch-Reaktors in einen zweiten Waschbehälter geleitet. Der Gasauslass kann auch in der Leitung vom Reaktionsbehälter zum Wellschlauch-Reaktor angeordnet sein.

Der zweite Waschvorgang erfolgt in dem zweiten Waschbehälter, dem ebenfalls Wasser zugeführt wird. Die oben für den ersten Waschbehälter beschriebenen Ausführungsformen eignen sich auch für den zweiten Waschbehälter. Der zweite Waschbehälter kann vorzugsweise identisch zum dem ersten aber auch von diesem verschieden ausgestaltet sein. Die Gasphase, die aus Chlordioxid bzw. Chlor und Kohlendioxid gebildet wird, kann unten in den zweiten Waschbehälter eingeleitet werden. In einer weiteren Ausführungsform kann die Einleitung der Gasphase in den zweiten Waschbehälter oberhalb des Wasserspiegels erfolgen. Die im zweiten Waschbehälter gebildete wässrige Lösung von Chlordioxid und/oder Chlor wird in demselben Vorratsbehälter wie die aus dem ersten Waschbehälter oder in einem weiteren Vorratsbehälter gesammelt.

Am anderen Ende des Wellschlauch-Reaktors befindet sich ein Flüssigkeitsauslass, durch welchen die Reaktionslösung aus dem Reaktor ausgeleitet wird, und der Einlass für das Kohlendioxid aus dem ersten Waschbehälter. Die am Auslass ankommende flüssige Phase enthält bei korrekter Abstimmung von Reaktordimensionen und Zufuhrmengen im wesentlichen weder Edukte (Perchlorat, Chlorat, Hypochlorit bzw. Chlorit und Säure) noch Chlor bzw. Chlordioxid. Diese Reaktionslösung kann daher als Abwasser über den Kanal entsorgt werden. Auch eine Entsalzung und Wiederverwendung als "frisches" Wasser ist möglich.

In einer bevorzugten Ausgestaltung der erfindungsgemäßen Vorrichtung wird die (nahezu) vollständig umgesetzte Reaktionslösung mit der Gasphase, d.h. dem Kohlendioxid, aus dem zweiten Waschbehälter vereinigt und in einer Zersetzungseinheit durch Strahlung und/oder Wärme und/oder eine oxidierbare Verbrauchselektrode, z.B. aus metallischem Eisen oder metallischem Aluminium, von restlichen Spuren Chlordioxid bzw. Chlor befreit, und dann in den Kanal entlassen.

Die Erfindung soll anhand der beigefügten Figur erläutert werden, ohne jedoch auf die speziell beschriebene Ausführungsform beschränkt zu sein. Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

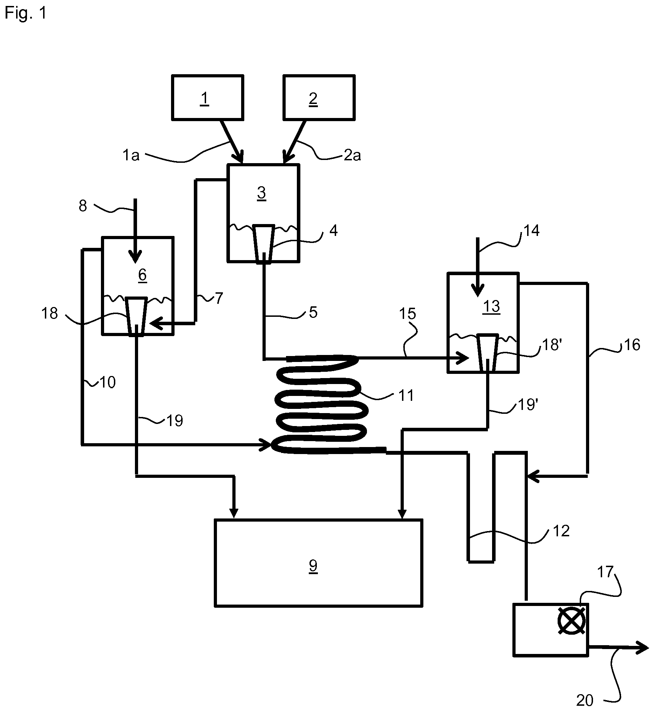

In Figur 1 ist eine erfindungsgemäße Vorrichtung schematisch veranschaulicht. Sie umfasst einen Reaktionsbehälter 3, in welchem Säure, z.B. Salzsäure, und Hypochlorit-, Chlorat-, Perchlorat- bzw. Chloritlösung sowie (Hydrogen)Carbonat, z.B. Natriumchlorit sowie Kaliumhydrogencarbonat, gemischt werden. Die Edukte bilden die Reaktionslösung. Dabei werden Salzsäure einerseits und die Lösung von Natriumchlorit und Kaliumhydrogencarbonat andererseits über getrennte Leitungen 1a und 2a aus den Vorratsbehältern 1 und 2 in den Reaktionsbehälter 3 eindosiert. Weiterhin umfasst die erfindungsmäße Vorrichtung einen Wellschlauch-Reaktor 11. Die flüssige Reaktionslösung fließt aus dem Reaktionsbehälter 3 durch einen Überlauf 4 ab und wird über eine Leitung 5 dem Wellschlauch-Reaktor 11 zugeführt. Die sich im Reaktionsbehälter 3 bildende Gasmischung aus Chlordioxid und/oder Chlor und Kohlendioxid gelangt über eine Leitung 7 in einen ersten Waschbehälter 6, welchem Wasser über eine Leitung 8 zugeführt wird. Dabei wird die Gasphase unten in den ersten Waschbehälter 6 eingeleitet. Chlordioxid bzw. Chlor löst sich weitestgehend in einem Sprühnebel von Wasser, wogegen Kohlendioxid sich nur in geringem Maße im Wasser löst. Die wässrige Lösung von Chlordioxid und/oder Chlor wird mittels eines Überlaufs 18 aus dem Waschbehälter 6 über eine Leitung 19 in einen Vorratsbehälter 9 geleitet.

Im Wellschlauch-Reaktor 11 strömt die flüssige Phase aufgrund der Zufuhr von Reaktionslösung über Leitung 5 Richtung Auslass. Das Kohlendioxid aus dem Waschbehälter 6 wird über eine Leitung 10 in den Wellschlauch-Reaktor 11 geleitet und dort im Gegenstrom zur Reaktionslösung durch den Wellschlauch-Reaktor 11 geführt. Dadurch wird auch das die Gasphase bildende, ausgasende Chlordioxid bzw. Chlor und Kohlendioxid im Gegenstrom zu der flüssigen Phase geführt und über Leitung 15 in den zweiten Waschbehälter 13 befördert, wobei die Gasphase unten in den zweiten Waschbehälter 13 eingeleitet wird. Dem Waschbehälter 13 wird über eine Leitung 14 Wasser zugeführt. Chlordioxid bzw. Chlor löst sich wiederum weitestgehend im Sprühnebel von Wasser, während das Kohlendioxid als Gasphase verbleibt. Die gebildete wässrige Lösung von Chlordioxid und/oder Chlor wird mittels eines Überlaufs 18' aus dem Waschbehälter 13 über eine Leitung 19' in den Vorratsbehälter 9 geleitet. Das Kohlendioxid wird über eine Leitung 16 aus dem zweiten Waschbehälter 13 abgeführt und in einer Leitung 12 mit der ausgegasten Reaktionslösung aus dem Wellschlauch-Reaktor 11 vereinigt. Eine Zersetzungseinheit mit Strahlungsquelle 17 befreit die flüssige Phase von restlichen Spuren von Chlordioxid bzw. Chlor, bevor sie über einen Ablauf 20 in den Kanal entlassen wird.

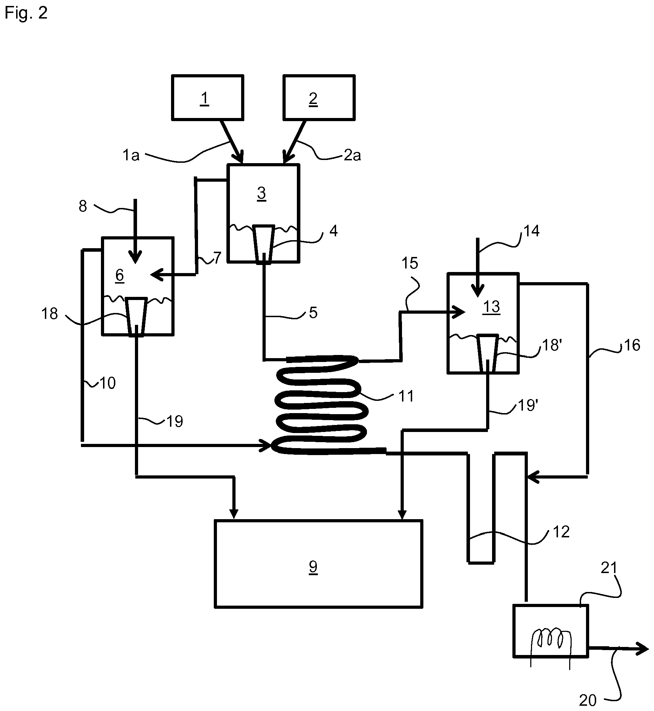

In Fig. 2 ist eine Variante einer erfindungsgemäßen Vorrichtung schematisch veranschaulicht. Im Unterschied zu der Vorrichtung gemäß Fig. 1 werden die sich im Reaktionsbehälter 3 und im Wellschlauch-Reaktor 11 bildenden Gasphasen aus Chlordioxid und/oder Chlor und Kohlendioxid in den ersten Waschbehälter 6 und in den zweiten Waschbehälter 13 oberhalb des Wasserspiegels über eine Leitung 7 bzw. 15 eingeleitet und mit einem fein verteilten Wassernebel niedergeschlagen. Außerdem umfasst die Vorrichtung eine Zersetzungseinheit mit Heizung 21, die die flüssige Phase von restlichen Spuren von Chlordioxid bzw. Chlor befreit, bevor sie über einen Ablauf 20 in den Kanal entlassen wird.

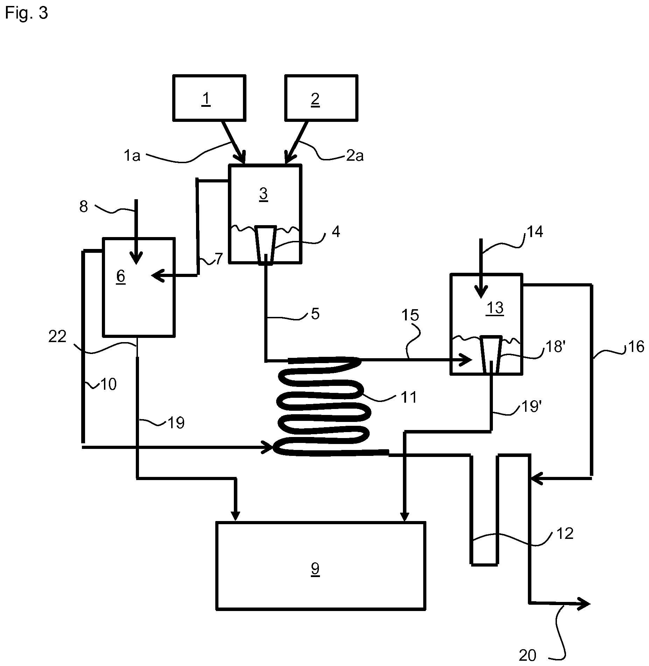

Bei der in Figur 3 gezeigten Variante wird die im Reaktionsbehälter 3 gebildete Gasphase wie bei der Variante von Figur 2 in dem Waschbehälter 6 mit eingesprühtem Wasser niedergeschlagen. Die gebildete wässrige Lösung von Chlordioxid bzw. Chlor wird über eine Kapillare 22 in den Vorratsbehälter 9 geleitet. Im Waschbehälter 13 wird wie in Figur 1 die Gasphase unterhalb der Wasseroberfläche eingeleitet und die wässrige Lösung durch einen Überlauf 18' abgeleitet. Bei der Variante von Figur 3 wird auf eine Zersetzungseinheit verzichtet, die aus dem Wellschlauch-Reaktor abfließende flüssige Phase gelangt über Ablauf 20 direkt in den Kanal.

### Bezugszeichenliste

- 1: Vorratsbehälter für Säure
- 2: Vorratsbehälter für Perchlorat-, Chlorat-, Chlorit- bzw. Hypochloritlösung und (Hydrogen)carbonat
- 1a: Leitung für die Zufuhr von Säure
- 2a: Leitung für die Zufuhr von Perchlorat-, Chlorat-, Chlorit- bzw. Hypochloritlösung und (Hydrogen)carbonat
- 3: Reaktionsbehälter
- 4: Überlauf für die Reaktionslösung
- 5: Leitung für Reaktionslösung
- 6: erster Waschbehälter
- 7: Leitung für Gasphase
- 8: Wasserzufuhr
- 9: Vorratsbehälter für wässrige Lösung von Chlordioxid und/oder Chlor
- 10: Leitung für Kohlendioxid
- 11: Wellschlauch-Reaktor
- 12: Leitung für Reaktionslösung
- 13: zweiter Waschbehälter
- 14: Wasserzufuhr
- 15: Leitung für Gasphase
- 16: Leitung für Kohlendioxid
- 17: Zersetzungseinheit mit Strahlungsquelle
- 18, 18': Überlauf für wässrige Produktlösung
- 19, 19': Leitung für wässrige Produktlösung
- 20: Ablauf in den Kanal
- 21: Zersetzungseinheit mit Heizung
- 22: Kapillare

## Patentansprüche

1. Vorrichtung zur Herstellung von Chlordioxid und/oder Chlor umfassend
- einen Reaktionsbehälter (3) mit getrennten Leitungen (1a, 2a) für die Zufuhr von Perchlorat-, Chlorat-, Hypochlorit- und/oder Chloritlösung, die ein Carbonat und/oder Hydrogencarbonat in einer solchen Menge enthält, dass pro Mol Chlordioxid und Chlor mindestens 0,25 mol Kohlendioxid gebildet werden, und Säurelösung, der einen Gasauslass und einen Flüssigkeitsauslass aufweist
- einen ersten Waschbehälter (6), der mit dem Gasauslass des Reaktionsbehälters (3) verbunden ist, um gebildetes Chlordioxid und/oder Chlor von gebildetem Kohlendioxid zu trennen und in Wasser zu lösen um eine wässrige Lösung von Chlordioxid und/oder Chlor zu bilden,
- einen Vorratsbehälter (9) für die wässrige Lösung von Chlordioxid und/oder Chlor,
- einen Wellschlauch-Reaktor (11), der einen Gasauslass und einen Flüssigkeitseinlass an seinem ersten Ende und einen Flüssigkeitsauslass und Gaseinlass an seinem anderen Ende aufweist, wobei sein Flüssigkeitseinlass mit dem Flüssigkeitsauslass des Reaktionsbehälters (3) verbunden ist und sein Gaseinlass mit dem ersten Waschbehälter (6) verbunden ist, um das abgetrennte Kohlendioxid dem Wellschlauch-Reaktor (11) zuzuführen, wobei der Wellschlauch-Reaktor (11) so ausgebildet ist, dass die zugeführte Reaktionslösung eine flüssige Phase bildet, das Chlor und/oder Chlordioxid aus der flüssigen Phase ausgast und eine Gasphase bildet, die zusammen mit dem im ersten Waschbehälter abgetrennten Kohlendioxid im Gegenstrom zur Reaktionslösung geführt wird, und
- einen zweiten Waschbehälter (13) der mit dem Gasauslass des Wellschlauch-Reaktors (11) verbunden ist, um gebildetes Chlordioxid und/oder Chlor von gebildetem Kohlendioxid zu trennen und in Wasser zu lösen um weitere wässrige Lösung von Chlordioxid und/oder Chlor zu bilden.

2. Vorrichtung gemäß Anspruch 1, **dadurch gekennzeichnet, dass** der Reaktionsbehälter (3) als Flüssigkeitsauslass einen Überlauf (4) oder eine Kapillare oder eine Leitung mit engem Querschnitt aufweist, vorzugsweise einen Überlauf (4).

3. Vorrichtung gemäß Anspruch 1 oder 2, **dadurch gekennzeichnet, dass** der erste und/oder der zweite Waschbehälter (6, 13) ein teilweise mit Wasser gefülltes, vorzugsweise zylindrisches, Gefäß ist, das unten mit dem Gasauslass des Reaktionsbehälters (3) bzw. Wellschlauch-Reaktors (11) verbunden ist, und vorzugsweise für die Einleitung von Chlordioxid bzw. Chlor und Kohlendioxid einen Gasverteiler, insbesondere eine Fritte aufweist.

4. Vorrichtung gemäß Anspruch 3, **dadurch gekennzeichnet, dass** der erste und/oder der zweite Waschbehälter (6, 13) ein vorzugsweise zylindrisches Gefäß ist, das mit dem Gasauslass des Reaktionsbehälters (3) bzw. Wellschlauch-Reaktors (11) verbunden ist, wobei ein Gaseinlass an dem Waschbehälter (6, 13) oberhalb einer ggfs. in dem Waschbehälter (6, 13) vorliegenden wässrigen Phase angeordnet ist.

5. Vorrichtung gemäß Anspruch 3 oder 4, **dadurch gekennzeichnet, dass** das dem Waschbehälter (6, 13) zugeführte Wasser in den Waschbehälter (6, 13) eingesprüht wird.

6. Vorrichtung gemäß einem der Ansprüche 1 bis 5, **dadurch gekennzeichnet, dass** der erste und/oder der zweite Waschbehälter (6, 13) zur Ableitung der wässrigen Lösung von Chlordioxid und/oder Chlor in den Vorratsbehälter (9) einen Überlauf (18, 18') oder eine Kapillare (22) oder eine Leitung mit engem Querschnitt aufweist, vorzugsweise einen Überlauf (18, 18').

7. Vorrichtung gemäß einem der Ansprüche 1 bis 6, weiter umfassend eine Zersetzungseinheit zur Umwandlung von Chlordioxid und/oder Chlor in dem Kohlendioxid aus dem zweiten Waschbehälter (13) und/oder der aus dem Flüssigkeitsauslass des Wellschlauch-Reaktors (11) abgeleiteten, flüssigen Phase.

8. Vorrichtung gemäß Anspruch 7, **dadurch gekennzeichnet, dass** die Zersetzungseinheit eine Zersetzungseinheit mit Strahlungsquelle (17), eine Zersetzungseinheit mit Heizung (21) oder eine Zersetzungseinheit mit einer Verbrauchselektrode, z.B. aus Eisen oder Aluminium, ist, vorzugsweise eine Zersetzungseinheit mit Strahlungsquelle (17).

9. Vorrichtung gemäß einem der Ansprüche 1 bis 8, **dadurch gekennzeichnet, dass** der Reaktionsbehälter (3) ein zylindrisches Gefäß mit einem Volumen von 0,05 bis 100 Liter, vorzugsweise von 0,5 bis 5 Liter ist.

10. Vorrichtung gemäß einem der Ansprüche 1 bis 9, **dadurch gekennzeichnet, dass** der Wellschlauch-Reaktor (11) ein Verhältnis von Durchmesser zu Länge von mindestens 1:30, vorzugsweise mindestens 1:1000, besonders bevorzugt mindestens 1:20000 aufweist.

11. Vorrichtung gemäß einem der Ansprüche 1 bis 10, **dadurch gekennzeichnet, dass** der Wellschlauch-Reaktor (11) eine Länge von 0,3 bis 50 m, bevorzugt von 1 bis 20 m, aufweist.

12. Vorrichtung gemäß einem der Ansprüche 1 bis 11, **dadurch gekennzeichnet, dass** der Reaktionsbehälter (3) und/oder der Wellschlauch-Reaktor (11) zusätzlich eine äußere und/oder innere Kühlung aufweist.
